# EUROPEAN PATENT APPLICATION

(11) **EP 3 868 467 A1**
(43) Date of publication of application: **25.08.2021**
(21) Application number: 20158971.0
(22) Date of filing: 24.02.2020
(51) Int. Cl.: B01J 20/16, B01J 20/10, B01J 20/26, B01J 20/34, C02F 1/28

(54) **CARBON DIOXIDE EXTRACTIONS**

(71) Applicant: Joos, Lennart Herman Simon, 9270 Kalken (BE)
(72) Inventor: Joos, Lennart Herman Simon, 9270 Kalken (BE)
(74) Representative: Nederlandsch Octrooibureau

(57) **Abstract**

The current invention provides methods for extracting carbon dioxide from a liquid, and apparatuses for performing such methods.

## Description

### Field

The invention relates to the field of a carbon dioxide extraction from a liquid.

### Background of the invention

The extraction of carbon dioxide from fluids is an important topic of research and development, especially in view of the anthropogenic global warming caused by an increased atmospheric concentration of carbon dioxide.

Although several methods for extracting carbon dioxide from gas streams and mixtures known as Carbon Capture, or in the case of extraction from air as Direct Air Capture (DAC), have been proposed, only few extractions from liquids have been described in the art. The methods for extracting carbon dioxide from a liquid known in the art either employ adjusting the temperature, pressure and/or pH to alter the solubility of carbon dioxide in water (e.g. [1]) or employ electrochemistry (e.g. [2]). However, these approaches are energetically demanding and, in the case of extraction from large bodies of (liquid) water, invasive for aquatic life.

Hence, there is an unmet need in the art for new methods for extracting carbon dioxide from a liquid which are neither energetically demanding and operationally expensive, nor invasive for aquatic life.

### Description of the invention

### Extraction methods

In a first aspect, the invention provides a method for extracting carbon dioxide from a liquid, said method comprising an extraction cycle, wherein said extraction cycle comprises (i) a sorption step wherein carbon dioxide dissolved in said liquid is adsorbed to a porous material, wherein said porous material contacts said liquid; and (ii) a desorption step wherein said adsorbed carbon dioxide obtained at the end of said sorption step is released from said porous material as gaseous carbon dioxide.

In a preferred embodiment is provided a method according to this first aspect, wherein said method does not comprise the use of an electrode. A method according to this preferred embodiment is called a method of the invention or a method according to the invention in the context of this application. A method according to the invention overcomes the problems of methods for extracting carbon dioxide from liquids described in the art, as explained below.

Carbon dioxide, or a carbon dioxide molecule, is defined as a molecule which may be represented by CO₂, H₂CO₃, HCO₃⁻, CO₃²⁻, or a salt thereof, in the context of this application. Carbon dioxide and a carbon dioxide molecule are used interchangeably in the context of this application. Carbon dioxide in or comprised in a liquid is carbon dioxide dissolved in said liquid.

Extracting carbon dioxide from a liquid means transferring a carbon dioxide molecule in said liquid to another phase. In other words, said carbon dioxide molecule is dissoluted from said liquid and transferred to another phase. Herein, it is understood that transferring implies that said carbon dioxide molecule, represented by a structure selected from the group consisting of CO₂, H₂CO₃, HCO₃⁻, CO₃²⁻, or a salt thereof, in said liquid may be represented by another structure selected from said group in another phase. As understood by the skilled person, "to dissolute from" means to remove from a solution, and is the opposite of "to dissolve in". Examples of carbon dioxide in another phase are gaseous carbon dioxide, adsorbed carbon dioxide and carbon dioxide dissoluted in another liquid.

A liquid is a pure liquid, a liquid solution, or a colloid wherein a pure liquid or a liquid solution is the continuous phase. Hence, a method according to the invention is not a method for extracting carbon dioxide from a gas phase. A preferred liquid is water. In the context of this application, water is pure water, or a solution thereof, or a colloid wherein pure water or a solution thereof is the continuous phase. As clear to the skilled person, water may be salt water or fresh water.

In a preferred embodiment is provided a method according to the invention, wherein said liquid is water. In a more preferred embodiment is provided a method according to the invention wherein said liquid is salt water. In a more preferred embodiment is provided a method according to the invention wherein said liquid is sea water. In a preferred embodiment, said water is fresh water. In another preferred embodiment is provided a method according to the invention, wherein said water is comprised in blood.

In the context of this invention, salt water is water having a concentration of salts of at least 15 parts per thousand. Preferably, said concentration is at least 20 parts per thousand, or at least 25 parts per thousand, or at least 30 parts per thousand, or at least 35 parts per thousand, or at least 40 parts per thousand, or at least 45 parts per thousand, or at least 50 parts per thousand, or at least 100 parts per thousand, or at least 150 parts per thousand, or at least 200 parts per thousand, or at least 250 parts per thousand, or at least 300 parts per thousand. Preferably, salt water has a concentration of salts lower than 400 parts per thousand, lower than 350 parts per thousand, lower than 300 parts per thousand, lower than 250 parts per thousand, lower than 200 parts per thousand, lower than 150 parts per thousand, lower than 100 parts per thousand, lower than 90 parts per thousand, lower than 80 parts per thousand, lower than 70 parts per thousand, lower than 60 parts per thousand or lower than 50 parts per thousand.

In a preferred embodiment is provided a method according to the invention, wherein said liquid is water, and wherein the concentration of carbon dioxide in said water is at least 100 micromoles per liter, or at least 200 micromoles per liter, or at least 300 micromoles per liter, or at least 400 micromoles per liter, or at least 500 micromoles per liter, or at least 600 micromoles per liter, or at least 700 micromoles per liter, or at least 800 micromoles per liter, or at least 900 micromoles per liter, or at least 1000 micromoles per liter, or at least 2000 micromoles per liter, or at least 3000 micromoles per liter, or at least 4000 micromoles per liter, or at least 5000 micromoles per liter, or at least 6000 micromoles per liter, or at least 7000 micromoles per liter, or at least 8000 micromoles per liter, or at least 9000 micromoles per liter, or at least 10000 micromoles per liter, or at least 15000 micromoles per liter, or at least 20000 micromoles per liter, or at least 25000 micromoles per liter, or at least 30000 micromoles per liter, or at least 35000 micromoles per liter, or at least 40000 micromoles per liter, or at least 45000 micromoles per liter, or at least 50000 micromoles per liter, or at least 55000 micromoles per liter, or at least 60000 micromoles per liter, or at least 65000 micromoles per liter, or at least 70000 micromoles per liter, or at least 75000 micromoles per liter, or at least 80000 micromoles per liter, or at least 85000 micromoles per liter, or at least 90000 micromoles per liter, or at least 95000 micromoles per liter, or at least 100000 micromoles per liter. Preferably, said water is salt water. More preferably, said water is sea water.

In a preferred embodiment is provided a method according to the invention, wherein said liquid is water, and wherein the concentration of carbon dioxide in said water is lower than 100000 micromoles per liter, or lower than 95000 micromoles per liter, or lower than 90000 micromoles per liter, or lower than 85000 micromoles per liter, or lower than 80000 micromoles per liter, or lower than 75000 micromoles per liter, or lower than 70000 micromoles per liter, or lower than 65000 micromoles per liter, or lower than 60000 micromoles per liter, or lower than 55000 micromoles per liter, or lower than 50000 micromoles per liter, or lower than 45000 micromoles per liter, or lower than 40000 micromoles per liter, or lower than 35000 micromoles per liter, or lower than 30000 micromoles per liter, or lower than 25000 micromoles per liter, or lower than 20000 micromoles per liter, or lower than 15000 micromoles per liter, or lower than 10000 micromoles per liter. Preferably, said water has at least a given concentration of carbon dioxide in said water as defined in the previous embodiment. Preferably, said water is salt water. More preferably, said water is sea water.

In a preferred embodiment is provided a method according to the invention, wherein said liquid is water, and wherein the concentration of carbon dioxide in said water is from 100 up to 40000 micromoles per liter. Preferably, said water is salt water. More preferably, said water is sea water.

In another preferred embodiment is provided a method according to the invention, wherein said liquid is water, and wherein the pH of said water is below 9.5, or below 9.45, or below 9.4, or below 9.35, or below 9.3, or below 9.25, or below 9.2, or below 9.15, or below 9.1, or below 9.05, or below 9, or below 8.95, or below 8.9, or below 8.85, or below 8.8, or below 8.75, or below 8.7, or below 8.65, or below 8.6, or below 8.55, or below 8.5, or below 8.45, or below 8.4, or below 8.35, or below 8.3, or below 8.25, or below 8.2, or below 8.15, or below 8.1, or below 8.05, or below 8, or below 7.95, or below 7.9, or below 7.85, or below 7.8, or below 7.75, or below 7.7, or below 7.65, or below 7.6, or below 7.55, or below 7.5, or below 7.45, or below 7.4, or below 7.35, or below 7.3, or below 7.25, or below 7.2, or below 7.15, or below 7.1, or below 7.05, or below 7, or below 6.95, or below 6.9, or below 6.85, or below 6.8, or below 6.75, or below 6.7, or below 6.65, or below 6.6, or below 6.55, or below 6.5, or below 6.45, or below 6.4, or below 6.35, or below 6.3, or below 6.25, or below 6.2, or below 6.15, or below 6.1, or below 6.05, or below 6, or below 5.95, or below 5.9, or below 5.85, or below 5.8, or below 5.75, or below 5.7, or below 5.65, or below 5.6, or below 5.55, or below 5.5, or below 5.45, or below 5.4, or below 5.35, or below 5.3, or below 5.25, or below 5.2, or below 5.15, or below 5.1, or below 5.05, or below 5, or below 4.95, or below 4.9, or below 4.85, or below 4.8, or below 4.75, or below 4.7, or below 4.65, or below 4.6, or below 4.55, or below 4.5.

In another preferred embodiment is provided a method according to the invention, wherein said liquid is water, and wherein the pH of said water is at least 4.5, or at least 4.55, or at least 4.6, or at least 4.65, or at least 4.7, or at least 4.75, or at least 4.8, or at least 4.85, or at least 4.9, or at least 4.95, or at least 5, or at least 5.05, or at least 5.1, or at least 5.15, or at least 5.2, or at least 5.25, or at least 5.3, or at least 5.35, or at least 5.4, or at least 5.45, or at least 5.5, or at least 5.55, or at least 5.6, or at least 5.65, or at least 5.7, or at least 5.75, or at least 5.8, or at least 5.85, or at least 5.9, or at least 5.95, or at least 6, or at least 6.05, or at least 6.1, or at least 6.15, or at least 6.2, or at least 6.25, or at least 6.3, or at least 6.35, or at least 6.4, or at least 6.45, or at least 6.5, or at least 6.55, or at least 6.6, or at least 6.65, or at least 6.7, or at least 6.75, or at least 6.8, or at least 6.85, or at least 6.9, or at least 6.95, or at least 7, or at least 7.05, or at least 7.1, or at least 7.15, or at least 7.2, or at least 7.25, or at least 7.3, or at least 7.35, or at least 7.4, or at least 7.45, or at least 7.5, or at least 7.55, or at least 7.6, or at least 7.65, or at least 7.7, or at least 7.75, or at least 7.8, or at least 7.85, or at least 7.9, or at least 7.95, or at least 8, or at least 8.05, or at least 8.1, or at least 8.15, or at least 8.2, or at least 8.25, or at least 8.3, or at least 8.35, or at least 8.4, or at least 8.45, or at least 8.5, or at least 8.55, or at least 8.6, or at least 8.65, or at least 8.7, or at least 8.75, or at least 8.8, or at least 8.85, or at least 8.9, or at least 8.95, or at least 9, or at least 9.05, or at least 9.1, or at least 9.15, or at least 9.2, or at least 9.25, or at least 9.3, or at least 9.35, or at least 9.4, or at least 9.45, or at least 9.5.

In a more preferred embodiment is provided a method according to the invention, wherein said liquid is salt water, and wherein the pH of said water is below 8.100, or below 8.095, or below 8.090, or below 8.085, or below 8.080, or below 8.075, or below 8.070, or below 8.065, or below 8.060, or below 8.055, or below 8.050, or below 8.045, or below 8.040, or below 8.035, or below 8.030, or below 8.025, or below 8.020, or below 8.015, or below 8.010, or below 8.005, or below 8,000, or below 7.995, or below 7.990, or below 7.985, or below 7.980, or below 7.975, or below 7.970, or below 7.965, or below 7.960, or below 7.955, or below 7.950, or below 7.945, or below 7.940, or below 7.935, or below 7.930, or below 7.925, or below 7.920, or below 7.915, or below 7.910, or below 7.905, or below 7.900. Preferably, said salt water is sea water.

In a preferred embodiment is provided a method according to the invention, wherein said liquid is water, and wherein the pH of said water is from 5.5 up to 10.5, more preferably from 7.5 up to 8.5.

A method according to the invention is preferably a cyclic method, meaning that at least part of said method is repeated, or performed in essentially the same way, for a number of iterations. Said repeated part is called an extraction cycle in the context of the application.

A preferred extraction cycle comprises (i) a sorption step wherein carbon dioxide dissolved in a liquid is adsorbed to a porous material, wherein said porous material contacts said liquid; and (ii) a desorption step wherein said adsorbed carbon dioxide obtained at the end of said sorption step is released from said porous material as gaseous carbon dioxide, wherein said extraction cycle does not comprise the use of an electrode. This preferred extaction cycle is called an extraction cycle of or according to the invention in the context of this application. Preferably, said liquid is water.

In a preferred embodiment is provided a method according to the invention, wherein said method comprises at least 1, 2, 3, 4, 5, 6, 7, 8, 9, 10, 11, 12, 13, 14, 15, 16, 17, 18, 19, 20, 21, 22, 23, 24, 25, 26, 27, 28, 29, 30, 31, 32, 33, 34, 35, 36, 37, 38, 39, 40, 41, 42, 43, 44, 45, 46, 47, 48, 49, 50, 51, 52, 53, 54, 55, 56, 57, 58, 59, 60, 61, 62, 63, 64, 65, 66, 67, 68, 69, 70, 71, 72, 73, 74, 75, 76, 77, 78, 79, 80, 81, 82, 83, 84, 85, 86, 87, 88, 89, 90, 91, 92, 93, 94, 95, 96, 97, 98, 99, 100, 200, 300, 400, 500, 600, 700, 800, 900, 1000, 2000, 3000, 4000, 5000, 6000, 7000, 8000, 9000, 10 000, 15 000, 20 000, 25 000, 30 000, 35 000, 40 000, 45 000, 50 000, 55 000, 60 000, 65 000, 70 000, 75 000, 80 000, 85 000, 90 000, 95 000, 100 000, 200 000, 300 000, 400 000, 500 000, 600 000, 700 000, 800 000, 900 000, or 1 000 000 extraction cycles. In a more preferred embodiment is provided a method according to the invention, wherein said method comprises at least two extraction cycles. The same porous material may be used for all extraction cycles of the method according to the invention. Alternatively, several porous materials may be used in different extraction cycles of the method according to the invention.

In a preferred embodiment is provided a method according to the invention, wherein said method does not comprise more than 1 000 000, 900 000, 800 000, 700 000, 600 000, 500 000, 400 000, 300 000, 200 000, 100 000, 95 000, 90 000, 85 000, 80 000, 75 000, 70 000, 65 000, 60 000, 55 000, 50 000, 45 000, 40 000, 35 000, 30 000, 25 000, 20 000, 15 000, 10 000, 9000, 8000, 7000, 6000, 5000, 4000, 3000, 2000, or 1000 extraction cycles. Preferably, a method according to this embodiment comprises at least a given number of extraction cycles as defined in the previous embodiment.

In a preferred embodiment is provided a method according to the invention, wherein said method comprises from 2 up to 100 000 extraction cyles, preferably from 1000 up to 100 000 extraction cyles.

In a preferred embodiment is provided a method according to the invention, wherein the same porous material is used in all extraction cycles. Herein, it is understood that said porous material may be altered chemically or physically during said method. Preferably, during a method according to the invention, wherein the same porous material is used in all extraction cycles the carbon dioxide adsorption capacity and/or carbon dioxide affinity change by not more than 20%, or by no more than 15%, or by no more than 10%, or by no more than 9%, or by no more than 8%, or by no more than 7%, or by no more than 6%, or by no more than 5%, or by no more than 4%, or by no more than 3%, or by no more than 2%, or by no more than 1%.

In an alternative preferred embodiment is provided a method according to the invention, wherein at least two extraction cycles comprised in said method do not employ the same porous material.

During a sorption step comprised in a method according to the invention, carbon dioxide dissolved in a liquid is adsorbed to a porous material, wherein said porous material contacts said liquid.

A material in the context of this application is a pure material or a composite material. A composite material is a material comprising at least two pure materials, wherein said pure materials are bound strongly together and cannot easily be separated. Said pure materials comprised in a composite material are called the components of said composite material.

Preferably, a composite material is not homogeneous with respect to its components on the centimeter scale. In other words, a composite material according to this preferred definition does not comprise a sphere of at least 1 centimeter wherein said sphere comprises only a single component comprised in said composite material.

More preferably, a composite material is not homogeneous with respect to its components on the millimeter scale. In other words, a composite material according to this preferred definition does not comprise a sphere of at least 1 millimeter wherein said sphere comprises only a single component comprised in said composite material.

Hence, a material in the context of this application does not encompass composite structures constituted of multiple components, wherein said components are not bound strongly together and can easily be separated.

Preferably, a composite structure is homogeneous with respect to its components on the millimeter scale. In other words, a composite structure according to this preferred definition comprises a sphere of at least 1 millimeter wherein said sphere comprises a single component comprised in said composite structure.

More preferably, a composite structure is homogeneous with respect to its components on the centimeter scale. In other words, a composite structure according to this preferred definition comprises a sphere of at least 1 centimeter wherein said sphere comprises a single component comprised in said composite structure.

From the above, it is clear that a composite structure is different from a composite material. Whereas a composite structure comprises components that are not bound strongly together and can easily be separated, a composite material comprises components that are bound strongly together and cannot easily be separated.

A porous material is a material comprising pores. The relative volume of pores in a material is called the porosity of said material. Porosity is defined as the fraction of the volume of voids (or empty spaces) comprised in a material over the total volume of said material. Several methods such as nitrogen adsorption and mercury intrusion porosimetry may be used to determine the porosity of a composite material used in a method according to the invention.

In a preferred embodiment is provided a method according to the invention wherein said porous material is a material having a porosity of at least 20%, or at least 25%, or at least 30%, or at least 35%, or at least 40%, or at least 45%, or at least 50%, or at least 55%, or at least 60%, or at least 65%, or at least 66%, or at least 67%, or at least 68%, or at least 69%, or at least 70%, or at least 71%, or at least 72%, or at least 73%, or at least 74%, or at least 75%, or at least 76%, or at least 77%, or at least 78%, or at least 79%, or at least 80%, or at least 81%, or at least 82%, or at least 83%, or at least 84%, or at least 85%, or at least 86%, or at least 87%, or at least 88%, or at least 89%, or at least 90%, or at least 91%, or at least 92%, or at least 93%, or at least 94%, or at least 95%, or at least 96%, or at least 97%, or at least 98%, or at least 99%.

A parameter related to the porosity is the specific surface area. The specific surface area of a material is defined as the total surface area of said material per unit of mass, wherein said surface may be an internal or an external surface. An internal surface is the surface surrounding a pore. The specific surface area may be measured by applying the Brunauer-Emmett-Teller (BET) theory to nitrogen adsorption.

In a preferred embodiment is provided a method according to the invention wherein said porous material is a material having a specific surface area of at least 1 m²/g, or at least 2 m²/g, or at least 3 m²/g, or at least 4 m²/g, or at least 5 m²/g, or at least 6 m²/g, or at least 7 m²/g, or at least 8 m²/g, or at least 9 m²/g, or at least 10 m²/g, or at least 15 m²/g, or at least 20 m²/g, or at least 25 m²/g, or at least 30 m²/g, or at least 35 m²/g, or at least 40 m²/g, or at least 45 m²/g, or at least 50 m²/g, or at least 55 m²/g, or at least 60 m²/g, or at least 65 m²/g, or at least 70 m²/g, or at least 75 m²/g, or at least 80 m²/g, or at least 85 m²/g, or at least 90 m²/g, or at least 95 m²/g, or at least 100 m²/g, or at least 150 m²/g, or at least 200 m²/g, or at least 250 m²/g, or at least 300 m²/g, or at least 350 m²/g, or at least 400 m²/g, or at least 450 m²/g, or at least 500 m²/g, or at least 550 m²/g, or at least 600 m²/g, or at least 650 m²/g, or at least 700 m²/g, or at least 750 m²/g, or at least 800 m²/g, or at least 850 m²/g, or at least 900 m²/g, or at least 950 m²/g, or at least 1000 m²/g, or at least 1500 m²/g, or at least 2000 m²/g, or at least 2500 m²/g, or at least 3000 m²/g, or at least 3500 m²/g, or at least 4000 m²/g, or at least 4500 m²/g, or at least 5000 m²/g, or at least 5500 m²/g, or at least 6000 m²/g, or at least 6500 m²/g, or at least 7000 m²/g, or at least 7500 m²/g, or at least 8000 m²/g, or at least 8500 m²/g, or at least 9000 m²/g, or at least 9500 m²/g, or at least 10000 m²/g, or at least 15000 m²/g, or at least 20000 m²/g, or at least 25000 m²/g, or at least 30000 m²/g, or at least 35000 m²/g, or at least 40000 m²/g, or at least 45000 m²/g, or at least 50000 m²/g, or at least 55000 m²/g, or at least 60000 m²/g, or at least 65000 m²/g, or at least 70000 m²/g, or at least 75000 m²/g, or at least 80000 m²/g, or at least 85000 m²/g, or at least 90000 m²/g, or at least 95000 m²/g, or at least 100000 m²/g.

In a preferred embodiment is provided a method according to the invention wherein said porous material is a material having a specific surface area below 200000 m²/g, or below 150000 m²/g, or below 100000 m²/g, or below 95000 m²/g, or below 90000 m²/g, or below 85000 m²/g, or below 80000 m²/g, or below 75000 m²/g, or below 70000 m²/g, or below 65000 m²/g, or below 60000 m²/g, or below 55000 m²/g, or below 50000 m²/g, or below 45000 m²/g, or below 40000 m²/g, or below 35000 m²/g, or below 30000 m²/g, or below 25000 m²/g, or below 20000 m²/g, or below 15000 m²/g, or below 10000 m²/g, or below 9500 m²/g, or below 9000 m²/g, or below 8500 m²/g, or below 8000 m²/g, or below 7500 m²/g, or below 7000 m²/g, or below 6500 m²/g, or below 6000 m²/g, or below 5500 m²/g, or below 5000 m²/g, or below 4500 m²/g, or below 4000 m²/g, or below 3500 m²/g, or below 3000 m²/g, or below 2500 m²/g, or below 2000 m²/g, or below 1500 m²/g, or below 1000 m²/g, or below 950 m²/g, or below 900 m²/g, or below 850 m²/g, or below 800 m²/g, or below 750 m²/g, or below 700 m²/g, or below 650 m²/g, or below 600 m²/g, or below 550 m²/g, or below 500 m²/g, or below 450 m²/g, or below 400 m²/g, or below 350 m²/g, or below 300 m²/g, or below 250 m²/g, or below 200 m²/g, or below 150 m²/g, or below 100 m²/g. Preferably, a porous material used in a method according to this embodiment has at least a given specific surface area, as defined in the previous embodiment.

In a preferred embodiment is provided a method according to the invention wherein said porous material is a material having a specific surface area from 10 m²/g up to 10000 m²/g, preferably from 100 m²/g up to 3000 m²/g, more preferably from 200 m²/g up to 2000 m²/g.

The adsorption of a molecule to a (porous) material is the adhesion of said molecule to the surface of said (porous) material. Herein, it is understood that said surface may be an inner surface of said material such as the surface outlining a pore comprised in a porous material, or said surface may be an outer surface of said material. Preferably, adsorption refers to the adhesion of carbon dioxide. Adhesion may occur via chemisorption and/or physisorption. In the context of this application, adsorption "to a (porous) material", "in a (porous) material" and "onto a (porous) material" may be used interchangeably.

A (porous) material is characterized by a certain carbon dioxide adsorption capacity. The carbon dioxide adsorption capacity of a material is the maximum amount of carbon dioxide that can be adsorbed to said material at a given temperature. Preferably, the carbon dioxide adsorption capacity of a material is expressed as the number of carbon dioxide molecules which can (maximally) be adsorbed to a gram of said material. The carbon dioxide adsorption capacity of a porous material used in a method according to the invention may be measured by increasing the carbon dioxide (partial) pressure until a saturation adsorption is reached. Preferably, the carbon dioxide adsorption capacity is determined at a temperature of 298 Kelvin.

In a preferred embodiment is provided a method according to the invention, wherein said porous material has a carbon dioxide adsorption capacity of at least 0.1 millimol (carbon dioxide) per gram (of said porous material), or at least 0.2 millimol per gram, or at least 0.3 millimol per gram, or at least 0.4 millimol per gram, or at least 0.5 millimol per gram, or at least 0.6 millimol per gram, or at least 0.7 millimol per gram, or at least 0.8 millimol per gram, or at least 0.9 millimol per gram, or at least 1 millimol per gram, or at least 1.5 millimol per gram, or at least 2 millimol per gram, or at least 2.5 millimol per gram, or at least 3 millimol per gram, or at least 3.5 millimol per gram, or at least 4 millimol per gram, or at least 4.5 millimol per gram, or at least 5 millimol per gram, or at least 5.5 millimol per gram, or at least 6 millimol per gram, or at least 6.5 millimol per gram, or at least 7 millimol per gram, or at least 7.5 millimol per gram, or at least 8 millimol per gram, or at least 8.5 millimol per gram, or at least 9 millimol per gram, or at least 9.5 millimol per gram, or at least 10 millimol per gram, or at least 10 millimol per gram, or at least 11 millimol per gram, or at least 12 millimol per gram, or at least 13 millimol per gram, or at least 14 millimol per gram, or at least 15 millimol per gram, or at least 16 millimol per gram, or at least 17 millimol per gram, or at least 18 millimol per gram, or at least 19 millimol per gram, or at least 20 millimol per gram at 298 Kelvin. Preferably, said porous material is used in a method according to the invention wherein said liquid is water.

In a preferred embodiment is provided a method according to the invention, wherein said porous material has a carbon dioxide adsorption capacity lower than 100 millimol per gram, or lower than 95 millimol per gram, or lower than 90 millimol per gram, or lower than 85 millimol per gram, or lower than 80 millimol per gram, or lower than 75 millimol per gram, or lower than 70 millimol per gram, or lower than 65 millimol per gram, or lower than 60 millimol per gram, or lower than 55 millimol per gram, or lower than 50 millimol per gram, or lower than 45 millimol per gram, or lower than 40 millimol per gram, or lower than 35 millimol per gram, or lower than 30 millimol per gram, or lower than 25 millimol per gram, or lower than 20 millimol per gram at 298 Kelvin. Prefearbly, a porous material used in a method according to this embodiment has at least a given carbon dioxide capacity as defined in the previous embodiment. Preferably, said porous material is used in a method according to the invention wherein said liquid is water.

In a preferred embodiment is provided a method according to the invention, wherein said porous material has a carbon dioxide adsorption capacity from 0.1 millimol per gram up to 50 millimol per gram, preferably from 1 millimol per gram up to 10 millimol per gram. Preferably, said porous material is used in a method according to the invention wherein said liquid is water.

In a preferred embodiment is provided a method according to the invention, wherein said method comprises at least two extraction cycles according to the invention, wherein the same porous material is used in all extraction cycles comprised in said method, and wherein the carbon dioxide adsorption capacity of said porous material does not change by more than 20%, or by no more than 15%, or by no more than 10%, or by no more than 9%, or by no more than 8%, or by no more than 7%, or by no more than 6%, or by no more than 5%, or by no more than 4%, or by no more than 3%, or by no more than 2%, or by no more than 1% during said method.

A (porous) material is further characterized by a certain carbon dioxide affinity. The carbon dioxide affinity of a material is the ease of adsorption of carbon dioxide to said material at a given temperature. Preferably, the carbon dioxide adsorption capacity of a material is expressed as the first-order rate constant of the adsorption curve of carbon dioxide to said material. The adsorption curve is the amount of carbon dioxide adsorbed to said material at a given temperature in function of CO₂ pressure, which can easily be measured by a skilled person. As well known by the skilled person, the first-order rate constant may be determined by approximating said adsorption curve as a first-order kinetics process. It should be noted that this preferred definition of carbon dioxide affinity does not imply that the adsorption of carbon dioxide to a porous material used in a method according to the invention is essentially a first-order process. Preferably, the carbon dioxide affinity is determined at a temperature of 298 Kelvin.

In a preferred embodiment is provided a method according to the invention wherein said porous material has a carbon dioxide affinity of at least 0.1 min⁻¹, or at least 0.2 min⁻¹, or at least 0.3 min⁻¹, or at least 0.4 min⁻¹, at least 0.5 min⁻¹, or at least 0.6 min⁻¹, or at least 0.7 min⁻¹, or at least 0.8 min⁻¹, or at least 0.9 min⁻¹, or at least 1 min⁻¹, or at least 1.5 min⁻¹, or at least 2 min⁻¹, or at least 2.5 min⁻¹, or at least 3 min⁻¹, or at least 3.5 min⁻¹, or at least 4 min⁻¹, or at least 4.5 min⁻¹, or at least 5 min⁻¹, or at least 5.5 min⁻¹, or at least 6 min⁻¹, or at least 6.5 min⁻¹, or at least 7 min⁻¹, or at least 7.5 min⁻¹, or at least 8 min⁻¹, or at least 8.5 min⁻¹, or at least 9 min⁻¹, or at least 9.5 min⁻¹, or at least 10 min⁻¹, or at least 10.5 min⁻¹, or at least 11 min⁻¹, or at least 11.5 min⁻¹, or at least 12 min⁻¹, or at least 12.5 min⁻¹, or at least 13 min⁻¹, or at least 13.5 min⁻¹, or at least 14 min⁻¹, or at least 14.5 min⁻¹, or at least 15 min⁻¹ at 298 Kelvin. Preferably, said liquid is water.

In a preferred embodiment is provided a method according to the invention wherein said porous material has a carbon dioxide affinity lower than 30 min⁻¹, or lower than 29 min⁻¹, or lower than 28 min⁻¹, or lower than 27 min⁻¹, or lower than 26 min⁻¹, or lower than 25 min⁻¹, or lower than 24 min⁻¹, or lower than 23 min⁻¹, or lower than 22 min⁻¹, or lower than 21 min⁻¹, or lower than 20 min⁻¹, or lower than 19 min⁻¹, or lower than 18 min⁻¹, or lower than 17 min⁻¹, or lower than 16 min⁻¹, or lower than 15 min⁻¹ at 298 Kelvin. Preferably, a porous material used in method according to this embodiment has at least a given carbon dioxide affinity as defined in the previous embodiment. Preferably, said liquid is water.

In a preferred embodiment is provided a method according to the invention wherein said porous material has a carbon dioxide affinity form 0.5 min⁻¹ up to 20 min⁻¹, preferably from 1 min⁻¹ up to 10 min⁻¹. Preferably, a porous material used in method according to this embodiment has at least a given carbon dioxide affinity as defined in the previous embodiment. Preferably, said liquid is water.

In a preferred embodiment is provided a method according to the invention, wherein said method comprises at least two extraction cycles according to the invention, wherein the same porous material is used in all extraction cycles comprised in said method, and wherein the carbon dioxide affinity of said porous material does not change by more than 20%, or by no more than 15%, or by no more than 10%, or by no more than 9%, or by no more than 8%, or by no more than 7%, or by no more than 6%, or by no more than 5%, or by no more than 4%, or by no more than 3%, or by no more than 2%, or by no more than 1% during said method.

The carbon dioxide adorption selectivity of a porous material used in a method according to the invention is defined as the ratio of the total number of carbon dioxide molecules adsorbed to said porous material at the end of the sorption step to the total number of molecules of said liquid adsorbed to said porous material at the end of the sorption step. The carbon dioxide adsorption selectivity of a material is also called the carbon dioxide adsorption selectivity of said material in said liquid.

In a preferred embodiment is provided a method according to the invention, wherein the carbon dioxide adsorption selectivity of said porous material is at least 0.01, or at least 0.02, or at least 0.03, or at least 0.04, or at least 0.05, or at least 0.06, or at least 0.07, or at least 0.08, or at least 0.09, or at least 0.1, or at least 0.2, or at least 0.3, or at least 0.4, or at least 0.5, or at least 0.6, or at least 0.7, or at least 0.8, or at least 0.9, or at least 1, or at least 2, or at least 3, or at least 4, or at least 5, or at least 6, or at least 7, or at least 8, or at least 9, or at least 10, or at least 15, or at least 20, or at least 25, or at least 30, or at least 35, or at least 40, or at least 45, or at least 50, or at least 55, or at least 60, or at least 65, or at least 70, or at least 75, or at least 80, or at least 85, or at least 90, or at least 95, or at least 100. Preferably, said liquid is water. More preferably, said liquid is salt water.

In a preferred embodiment is provided a method according to the invention, wherein the carbon dioxide adsorption selectivity of said porous material is lower than 300, or lower than 290, or lower than 280, or lower than 270, or lower than 260, or lower than 250, or lower than 240, or lower than 230, or lower than 220, or lower than 210, or lower than 200, or lower than 190, or lower than 180, or lower than 170, or lower than 160, or lower than 150, or lower than 140, or lower than 130, or lower than 120, or lower than 110, or lower than 100, or lower than 95, or lower than 90, or lower than 85, or lower than 80, or lower than 75, or lower than 70, or lower than 65, or lower than 60, or lower than 55, or lower than 50, or lower than 45, or lower than 40, or lower than 35, or lower than 30, or lower than 25, or lower than 20, or lower than 15, or lower than 10, or lower than 9, or lower than 8, or lower than 7, or lower than 6, or lower than 5, or lower than 4, or lower than 3, or lower than 2, or lower than 1. Preferably, a porous material used in a method according to this embodiment has at least a given carbon dioxide adsorption capacity as defined in the previous embodiment. Preferably, said liquid is water. More preferably, said liquid is salt water.

In a preferred embodiment is provided a method according to the invention, wherein the carbon dioxide adsorption selectivity of said porous material is from 0.1 up to 200, preferably from 1 up to 30. Preferably, said liquid is water. More preferably, said liquid is salt water.

A porous material used in a method according to the invention is defined as a selective carbon dioxide adsorber (in said liquid) if the carbon dioxide selectivity of said porous material in said liquid is at least 0.01, or at least 0.02, or at least 0.03, or at least 0.04, or at least 0.05, or at least 0.06, or at least 0.07, or at least 0.08, or at least 0.09, or at least 0.1, or at least 0.2, or at least 0.3, or at least 0.4, or at least 0.5, or at least 0.6, or at least 0.7, or at least 0.8, or at least 0.9, or at least 1, or at least 2, or at least 3, or at least 4, or at least 5, or at least 6, or at least 7, or at least 8, or at least 9, or at least 10, or at least 15, or at least 20, or at least 25, or at least 30, or at least 35, or at least 40, or at least 45, or at least 50, or at least 55, or at least 60, or at least 65, or at least 70, or at least 75, or at least 80, or at least 85, or at least 90, or at least 95, or at least 100. Preferably, said liquid is water. More preferably, said liquid is salt water. In a preferred definition, said selective carbon dioxide adsorber is further characterized in that said the carbon dioxide adsorption selectivity of said porous material is lower than 300, or lower than 290, or lower than 280, or lower than 270, or lower than 260, or lower than 250, or lower than 240, or lower than 230, or lower than 220, or lower than 210, or lower than 200, or lower than 190, or lower than 180, or lower than 170, or lower than 160, or lower than 150, or lower than 140, or lower than 130, or lower than 120, or lower than 110, or lower than 100, or lower than 95, or lower than 90, or lower than 85, or lower than 80, or lower than 75, or lower than 70, or lower than 65, or lower than 60, or lower than 55, or lower than 50, or lower than 45, or lower than 40, or lower than 35, or lower than 30, or lower than 25, or lower than 20, or lower than 15, or lower than 10, or lower than 9, or lower than 8, or lower than 7, or lower than 6, or lower than 5, or lower than 4, or lower than 3, or lower than 2, or lower than 1.

In methods for extracting carbon dioxide from a gas phase in the art, a sorption step comprising an adsorption to a porous material is used as well. However, due to the reported hydrophilicity of the used porous materials, the use of these porous materials in a method for extracting carbon dioxide from liquid water is discouraged. The present invention differs substantially from the art by unexpectedly showing that a porous material which is hydrophilic in the gas phase is actually a selective carbon dioxide adsorber in liquid water. Therefore, said porous material is well suited to be used in a method according to the invention, contrary to what a skilled person looking at the art would assume. This is shown for carbon black in Example 1.

In a preferred embodiment is provided a method according to the invention wherein said porous material is a selective carbon dioxide adsorber. In a more preferred embodiment is provided a method according to the invention wherein the carbon dioxide adsorption selectivity of said material in said liquid is at least 0.01, or at least 0.02, or at least 0.03, or at least 0.04, or at least 0.05, or at least 0.06, or at least 0.07, or at least 0.08, or at least 0.09, or at least 0.1, or at least 0.2, or at least 0.3, or at least 0.4, or at least 0.5, or at least 0.6, or at least 0.7, or at least 0.8, or at least 0.9, or at least 1, or at least 2, or at least 3, or at least 4, or at least 5, or at least 6, or at least 7, or at least 8, or at least 9, or at least 10, or at least 15, or at least 20, or at least 25, or at least 30, or at least 35, or at least 40, or at least 45, or at least 50, or at least 55, or at least 60, or at least 65, or at least 70, or at least 75, or at least 80, or at least 85, or at least 90, or at least 95, or at least 100. Preferably, the carbon dioxide adsorption selectivity of said material in said liquid is lower than 300, or lower than 290, or lower than 280, or lower than 270, or lower than 260, or lower than 250, or lower than 240, or lower than 230, or lower than 220, or lower than 210, or lower than 200, or lower than 190, or lower than 180, or lower than 170, or lower than 160, or lower than 150, or lower than 140, or lower than 130, or lower than 120, or lower than 110, or lower than 100, or lower than 95, or lower than 90, or lower than 85, or lower than 80, or lower than 75, or lower than 70, or lower than 65, or lower than 60, or lower than 55, or lower than 50, or lower than 45, or lower than 40, or lower than 35, or lower than 30, or lower than 25, or lower than 20, or lower than 15, or lower than 10, or lower than 9, or lower than 8, or lower than 7, or lower than 6, or lower than 5, or lower than 4, or lower than 3, or lower than 2, or lower than 1. More preferably, the carbon dioxide adsorption selectivity of said material in said liquid is from 0.1 up to 200, preferably from 1 up to 30. Preferably, said liquid is water. More preferably, said liquid is salt water.

In another preferred embodiment is provided a method according to the invention wherein said porous material is selected from the group consisting of zeolites, porous aluminosilicate polymorphs, porous carbons, porous polymer networks, porous inorganic oxides, metal-organic-frameworks, zeolitic imidazolate frameworks and polyoligosiloxysilicones,
preferably wherein said porous material has a specific surface area of at least 100 m²/g, more preferably at least 1000 m²/g; and/or
preferably wherein said porous material has a carbon dioxide adsorption capacity of at least 1 millimol per gram at 298 Kelvin; and/or
preferably wherein said porous material has a carbon dioxide affinity of at least 1 min⁻¹, more preferably 5 min⁻¹ at 298 Kelvin; and/or
preferably wherein said porous material is a selective carbon dioxide adsorber in said liquid; and/or
preferably wherein said porous material comprises at least 1 acid site per 100 carbon dioxide adorption sites, more preferably at least 1 acid site per 20 carbon dioxide adsorption sites; and/or
preferably wherein said liquid is water.

Preferably, a zeolite according to the previous embodiment is selected from the group consisting of silicalite-1, H-ZSM-5, faujasite, mordenite and zeolite beta. Preferably, a porous inorganic oxide according to the previous embodiment is selected from the group consisting of alumina, silica and titania.

Preferably, a porous carbon is selected from the group consisting of carbon black and activated carbons.

In a more preferred embodiment is provided a method according to the invention wherein said porous material is selected from the group consisting of porous carbons and zeolites,
preferably wherein said porous material has a specific surface area of at least 1000 m²/g, more preferably at least 3000 m²/g; and/or
preferably wherein said porous material has a carbon dioxide adsorption capacity of at least 1 millimol per gram at 298 Kelvin; and/or
preferably wherein said porous material has a carbon dioxide affinity of at least 1 min⁻¹, more preferably 5 min⁻¹ at 298 Kelvin; and/or
preferably wherein said porous material is a selective carbon dioxide adsorber in said liquid; and/or
preferably wherein said porous material comprises at least 1 acid site per 100 carbon dioxide adorption sites, more preferably at least 1 acid site per 20 carbon dioxide adsorption sites; and/or
preferably wherein said liquid is water.

In a most preferred embodiment is provided a method according to the invention wherein said porous material is selected from the group consisting of carbon black, activated carbons, silicalite-1, H-ZSM-5, faujasite, mordenite, zeolite beta,
preferably wherein said porous material has a specific surface area of at least 1000 m²/g, more preferably at least 3000 m²/g; and/or
preferably wherein said porous material has a carbon dioxide adsorption capacity of at least 1 millimol per gram at 298 Kelvin; and/or
preferably wherein said porous material has a carbon dioxide affinity of at least 1 min⁻¹, more preferably 5 min⁻¹ at 298 Kelvin; and/or
preferably wherein said porous material is a selective carbon dioxide adsorber in said liquid; and/or
preferably wherein said porous material comprises at least 1 acid site per 100 carbon dioxide adorption sites, more preferably at least 1 acid site per 20 carbon dioxide adsorption sites; and/or
preferably wherein said liquid is water.

In a most preferred embodiment is provided a method according to the invention wherein said porous material is a porous carbon,
preferably wherein said porous material has a specific surface area of at least 1000 m²/g, more preferably at least 3000 m²/g; and/or
preferably wherein said porous material has a carbon dioxide adsorption capacity of at least 1 millimol per gram at 298 Kelvin; and/or
preferably wherein said porous material has a carbon dioxide affinity of at least 1 min⁻¹, more preferably 5 min⁻¹ at 298 Kelvin; and/or
preferably wherein said porous material is a selective carbon dioxide adsorber in said liquid; and/or
preferably wherein said porous material comprises at least 1 acid site per 100 carbon dioxide adorption sites, more preferably at least 1 acid site per 20 carbon dioxide adsorption sites; and/or
preferably wherein said liquid is water.

In a most preferred embodiment is provided a method according to the invention wherein said porous material is an activated carbon,
preferably wherein said porous material has a specific surface area of at least 1000 m²/g, more preferably at least 3000 m²/g; and/or
preferably wherein said porous material has a carbon dioxide adsorption capacity of at least 1 millimol per gram at 298 Kelvin; and/or
preferably wherein said porous material has a carbon dioxide affinity of at least 1 min⁻¹, more preferably 5 min⁻¹ at 298 Kelvin; and/or
preferably wherein said porous material is a selective carbon dioxide adsorber in said liquid; and/or
preferably wherein said porous material comprises at least 1 acid site per 100 carbon dioxide adorption sites, more preferably at least 1 acid site per 20 carbon dioxide adsorption sites; and/or
preferably wherein said liquid is water.

Example 1 illustrates a method according to the invention, wherein carbon black (A8040605 SF Super Activated Carbon) is used as a porous material. In this method, an increase of temperature was used in the desorption step. Contrary to the methods in the prior art, wherein a temperature increase is used to change the solubility of carbon dioxide in the liquid, the increase of temperature used in Example 1 is applied to the porous material in order to induce desorption from this material. Hence, applying the temperature increase in Example 1 is less energy-demanding than applying a temperature increase in the prior art.

In another preferred embodiment is provided a method according to the invention wherein said porous material is a composite material.

In another preferred embodiment is provided a method according to the invention wherein said porous material is not a membrane.

In another preferred embodiment is provided a method according to the invention wherein said porous material comprises an acid site. In a more preferred embodiment is provided a method according to the invention wherein said porous material comprises at least 1 acid sites per 90 carbon dioxide adsorption sites, per 80 carbon dioxide adsorption sites, per 70 carbon dioxide adsorption sites, per 60 carbon dioxide adsorption sites, per 50 carbon dioxide adsorption sites, per 40 carbon dioxide adsorption sites, per 30 carbon dioxide adsorption sites, per 20 carbon dioxide adsorption sites, per 10 carbon dioxide adsorption sites, per 10 carbon dioxide adsorption sites, per 9 carbon dioxide adsorption sites, per 8 carbon dioxide adsorption sites, per 7 carbon dioxide adsorption sites, per 6 carbon dioxide adsorption sites, per 5 carbon dioxide adsorption sites, per 4 carbon dioxide adsorption sites, per 3 carbon dioxide adsorption sites, per 2 carbon dioxide adsorption sites, or per 1 carbon dioxide adsorption site. An acid site is a group comprised in a material which is able to catalyze an acid-base reaction. Said acid-base reaction may be a Brønsted acid-base reaction of a Lewis acid-base reaction. Preferably, said acid site catalyzes the conversion of one compound selected from the group consisting of CO₂, H₂CO₃, HCO₃⁻, CO₃²⁻ into another compound selected from said group. A carbon dioxide adsorption site, as well known to the skilled person, is a specific part of said porous material to which a carbon dioxide molecule is able to adsorb. Herein, it is understood that other types of compounds may be able to adsorb to a carbon dioxide adsorption site.

In another more preferred embodiment is provided a method according to the invention wherein said porous material does not comprise more than 1 acid site per 20 carbon dioxide adsorption sites, per 30 carbon dioxide adsorption sites, per 40 carbon dioxide adsorption sites, per 50 carbon dioxide adsorption sites, per 60 carbon dioxide adsorption sites, per 70 carbon dioxide adsorption sites, per 80 carbon dioxide adsorption sites, per 90 carbon dioxide adsorption sites, or per 100 carbon dioxide adsorption sites. Preferably, a porous material used in a method according to this embodiment comprises at least a number of acid sites as defined in the previous embodiment.

In an even more preferred embodiment is provided a method according to the invention wherein said porous material comprise from 1 acid site per 20 carbon dioxide adsorption sites up to 1 acid site per 100 carbon dioxide adsorption sites.

In the sorption step comprised in a method according to the invention, a porous material contacts a liquid, meaning that a significant part of the outer surface of said porous material is in contact with said liquid. Preferably, said significant part of the outer surface is at least 50%, or at least 55%, or at least 60%, or at least 65%, or at least 70%, or at least 75%, or at least 80%, or at least 85%, or at least 90%, or at least 95%, or 100% of said outer surface. In a preferred method according to the invention said porous material at least 50%, or at least 55%, or at least 60%, or at least 65%, or at least 70%, or at least 75%, or at least 80%, or at least 85%, or at least 90%, or at least 95%, or 100% of the outer surface is submerged in said liquid.

As explained above, the art discourages contacting a porous material with liquid water in a method for extracting carbon dioxide. Since the porous materials used in the prior art are generally hydrophilic, a skilled person looking at the art would expect that these porous materials would not be selective carbon dioxide adsorbers in liquid water, thereby discouraging him or her to bring such a porous material in direct contact with liquid water in such a method. The current invention surprisingly shows that porous materials may be used in a method to extract carbon dioxide from a liquid, preferably liquid water.

During a desorption step comprised in a method according to the invention, adsorbed carbon dioxide obtained at the end of a sorption step is released from the porous material used in said sorption step as gaseous carbon dioxide.

The release of adsorbed carbon dioxide as gaseous carbon dioxide means that a carbon dioxide, adsorbed to a porous material via chemisorption and/or physisorption, is desorped from said porous material and is transferred to a gas phase. Gaseous carbon dioxide refers to a carbon dioxide molecule in a gas phase.

In a preferred embodiment is provided a method according to the invention wherein said gaseous carbon dioxide released in said desorption step is present in a gas phase with a concentration of at least 60 mol%, or at least 61 mol%, or at least 62 mol%, or at least 63 mol%, or at least 64 mol%, or at least 65 mol%, or at least 66 mol%, or at least 67 mol%, or at least 68 mol%, or at least 69 mol%, or at least 70 mol%, or at least 71 mol%, or at least 72 mol%, or at least 73 mol%, or at least 74 mol%, or at least 75 mol%, or at least 76 mol%, or at least 77 mol%, or at least 78 mol%, or at least 79 mol%, or at least 80 mol%, or at least 81 mol%, or at least 82 mol%, or at least 83 mol%, or at least 84 mol%, or at least 85 mol%, or at least 86 mol%, or at least 87 mol%, or at least 88 mol%, or at least 89 mol%, or at least 90 mol%, or at least 91 mol%, or at least 92 mol%, or at least 93 mol%, or at least 94 mol%, or at least 95 mol%, or at least 96 mol%, or at least 97 mol%, or at least 98 mol%, or at least 99 mol%.

In a preferred embodiment is provided a method according to the invention wherein said gaseous carbon dioxide released in said desorption step is present in a gas phase with a concentration lower than 99 mol%, or lower than 98 mol%, or lower than 97 mol%, or lower than 96 mol%, or lower than 95 mol%, or lower than 94 mol%, or lower than 93 mol%, or lower than 92 mol%, or lower than 91 mol%, or lower than 90 mol%, or lower than 90 mol%, or lower than 89 mol%, or lower than 88 mol%, or lower than 87 mol%, or lower than 86 mol%, or lower than 85 mol%, or lower than 84 mol%, or lower than 83 mol%, or lower than 82 mol%, or lower than 81 mol%, or lower than 80 mol%, or lower than 79 mol%, or lower than 78 mol%, or lower than 77 mol%, or lower than 76 mol%, or lower than 75 mol%, or lower than 74 mol%, or lower than 73 mol%, or lower than 72 mol%, or lower than 71 mol%, or lower than 70 mol%, or lower than 69 mol%, or lower than 68 mol%, or lower than 67 mol%, or lower than 66 mol%, or lower than 65 mol%, or lower than 64 mol%, or lower than 63 mol%, or lower than 62 mol%, or lower than 61 mol%, or lower than 60 mol%. Preferably, said gaseous carbon dioxide released in said desorption step has at least a given concentration as defined in the previous embodiment.

In a preferred embodiment is provided a method according to the invention wherein said gaseous carbon dioxide released in said desorption step is present in a gas phase with a concentration from 60 mol% up to 99 mol%, preferably from 75 mol% up to 95 mol%.

The release of adsorbed carbon dioxide as gaseous carbon dioxide in the desorption step may be induced by reducing pressure, and/or heating said porous material, and/or bringing said porous material in contact with steam. A method according to the invention wherein such a desorption method is used is also referred to as a pressure swing adsorption, a temperature swing adsorption or a moisture swing adsorption, respectively.

In a preferred embodiment is provided a method according to the invention wherein said desorption step comprises reducing pressure, and/or heating said porous material, and/or bringing said porous material in contact with steam.

In a more preferred embodiment is provided a method according to the invention wherein said desorption step comprises reducing pressure below 950 millibar, or below 900 millibar, or below 850 millibar, or below 800 millibar, or below 750 millibar, or below 700 millibar, or below 650 millibar, or below 600 millibar, or below 550 millibar, or below 500 millibar, or below 450 millibar, or below 400 millibar, or below 350 millibar, or below 300 millibar, or below 250 millibar, or below 200 millibar, or below 150 millibar, or below 100 millibar, or below 100 millibar, or below 95 millibar, or below 90 millibar, or below 85 millibar, or below 80 millibar, or below 75 millibar, or below 70 millibar, or below 65 millibar, or below 60 millibar, or below 55 millibar, or below 50 millibar, or below 45 millibar, or below 40 millibar, or below 35 millibar, or below 30 millibar, or below 25 millibar, or below 20 millibar, or below 15 millibar, or below 10 millibar, or below 5 millibar. Preferably said desorption step further comprises heating said porous material and/or bringing said porous material in contact with steam.

In another more preferred embodiment is provided a method according to the invention wherein said desorption step comprises reducing pressure, wherein said reduced pressure is at least 5 millibar, or at least 10 millibar, or at least 15 millibar, or at least 20 millibar, or at least 25 millibar, or at least 30 millibar, or at least 35 millibar, or at least 40 millibar, or at least 45 millibar, or at least 50 millibar, or at least 55 millibar, or at least 60 millibar, or at least 65 millibar, or at least 70 millibar, or at least 75 millibar, or at least 80 millibar, or at least 85 millibar, or at least 90 millibar, or at least 95 millibar, or at least 100 millibar, or at least 100 millibar, or at least 150 millibar, or at least 200 millibar, or at least 250 millibar, or at least 300 millibar, or at least 350 millibar, or at least 400 millibar, or at least 450 millibar, or at least 500 millibar, or at least 550 millibar, or at least 600 millibar, or at least 650 millibar, or at least 700 millibar, or at least 750 millibar, or at least 800 millibar, or at least 850 millibar, or at least 900 millibar, or at least 950 millibar. Preferably, said reduced pressure is below a given value as defined in the previous embodiment.

In a more preferred embodiment is provided a method according to the invention wherein said desorption step comprises reducing pressure by at least 50 millibar, or by at least 100 millibar, or by at least 150 millibar, or by at least 200 millibar, or by at least 250 millibar, or by at least 300 millibar, or by at least 350 millibar, or by at least 400 millibar, or by at least 450 millibar, or by at least 500 millibar, or by at least 550 millibar, or by at least 600 millibar, or by at least 650 millibar, or by at least 700 millibar, or by at least 750 millibar, or by at least 800 millibar, or by at least 850 millibar, or by at least 900 millibar, or by at least 950 millibar. Preferably said desorption step further comprises heating said porous material and/or bringing said porous material in contact with steam.

In a more preferred embodiment is provided a method according to the invention wherein said desorption step comprises reducing pressure not by more than 950 millibar, or not by more than 900 millibar, or not by more than 850 millibar, or not by more than 800 millibar, or not by more than 750 millibar, or not by more than 700 millibar, or not by more than 650 millibar, or not by more than 600 millibar, or not by more than 550 millibar, or not by more than 500 millibar, or not by more than 450 millibar, or not by more than 400 millibar, or not by more than 350 millibar, or not by more than 300 millibar, or not by more than 250 millibar, or not by more than 200 millibar, or not by more than 150 millibar, or not by more than 100 millibar, or not by more than 50 millibar. Preferably, reducing pressure is by at least a given value as defined in the previous embodiment. Preferably said desorption step further comprises heating said porous material and/or bringing said porous material in contact with steam.

In another more preferred embodiment is provided a method according to the invention wherein said desorption step comprises reducing pressure by an amount from 100 millibar up to 900 millibar, preferably from 250 millibar up to 750 millibar. Preferably said desorption step further comprises heating said porous material and/or bringing said porous material in contact with steam.

In another more preferred embodiment is provided a method according to the invention wherein said desorption step comprises heating said porous material to a temperature of at least 50 °C, or at least 55 °C, or at least 60 °C, or at least 65 °C, or at least 70 °C, or at least 75 °C, or at least 80 °C, or at least 85 °C, or at least 90 °C, or at least 95 °C, or at least 100 °C, or at least 105 °C, or at least 110 °C, or at least 115 °C, or at least 120 °C, or at least 125 °C, or at least 130 °C, or at least 135 °C, or at least 140 °C, or at least 145 °C, or at least 150 °C, or at least 155 °C, or at least 160 °C, or at least 165 °C, or at least 170 °C, or at least 175 °C, or at least 180 °C, or at least 185 °C, or at least 190 °C, or at least 195 °C, or at least 200 °C, or at least 205 °C, or at least 210 °C, or at least 215 °C, or at least 220 °C, or at least 225 °C, or at least 230 °C, or at least 235 °C, or at least 240 °C, or at least 245 °C, or at least 250 °C, or at least 255 °C, or at least 260 °C, or at least 265 °C, or at least 270 °C, or at least 275 °C, or at least 280 °C, or at least 285 °C, or at least 290 °C, or at least 295 °C, or at least 300 °C. Preferably said desorption step further comprises reducing pressure and/or bringing said porous material in contact with steam.

In another more preferred embodiment is provided a method according to the invention wherein said desorption step comprises heating said porous material to a temperature below 500 °C, or below 490 °C, or below 480 °C, or below 470 °C, or below 460 °C, or below 450 °C, or below 440 °C, or below 430 °C, or below 420 °C, or below 410 °C, or below 400 °C, or below 390 °C, or below 380 °C, or below 370 °C, or below 360 °C, or below 350 °C, or below 340 °C, or below 330 °C, or below 320 °C, or below 310 °C, or below 300 °C, or below 295 °C, or below 290 °C, or below 285 °C, or below 280 °C, or below 275 °C, or below 270 °C, or below 265 °C, or below 260 °C, or below 255 °C, or below 250 °C, or below 245 °C, or below 240 °C, or below 235 °C, or below 230 °C, or below 225 °C, or below 220 °C, or below 215 °C, or below 210 °C, or below 205 °C, or below 200 °C, or below 195 °C, or below 190 °C, or below 185 °C, or below 180 °C, or below 175 °C, or below 170 °C, or below 165 °C, or below 160 °C, or below 155 °C, or below 150 °C, or below 145 °C, or below 140 °C, or below 135 °C, or below 130 °C, or below 125 °C, or below 120 °C, or below 115 °C, or below 110 °C, or below 105 °C, or below 100 °C, or below 95 °C, or below 90 °C, or below 85 °C, or below 80 °C. Preferably, said heating is above a given temperature as defined in the previous embodiment. Preferably said desorption step further comprises reducing pressure and/or bringing said porous material in contact with steam.

In another more preferred embodiment is provided a method according to the invention wherein said desorption step comprises heating said porous material to a temperature from 50 °C up to 300 °C, preferably from 100°C up to 250°C. Preferably said desorption step further comprises reducing pressure and/or bringing said porous material in contact with steam.

A method according to the invention may require the input of energy. In other words, the extraction of each molecule of carbon dioxide extracted via a method according to the invention may require a given amount of energy. Said input of energy may be under the form of electrical or mechanical work, for example to run a compressor or a pump, or under the form of heat, for example to to heat the material. Preferably, wherever an input of energy is described in the context of this application, reference is made to Gibbs free energy.

The porous material and the process parameters of the desorption step (e.g. the temperature and the pressure in the embodiments above) of a method according to the invention are preferably selected in such a way that said method is energetically efficient. Preferably, energetically efficient means that said method requires less than 200 kilojoules per mole of carbon dioxide extracted, or less than 190 kilojoules per mole of carbon dioxide extracted, or less than 180 kilojoules per mole of carbon dioxide extracted, or less than 170 kilojoules per mole of carbon dioxide extracted, or less than 160 kilojoules per mole of carbon dioxide extracted, or less than 150 kilojoules per mole of carbon dioxide extracted, or less than 140 kilojoules per mole of carbon dioxide extracted, or less than 130 kilojoules per mole of carbon dioxide extracted, or less than 120 kilojoules per mole of carbon dioxide extracted, or less than 110 kilojoules per mole of carbon dioxide extracted, or less than 100 kilojoules per mole of carbon dioxide extracted, or less than 90 kilojoules per mole of carbon dioxide extracted, or less than 80 kilojoules per mole of carbon dioxide extracted, or less than 70 kilojoules per mole of carbon dioxide extracted, or less than 60 kilojoules per mole of carbon dioxide extracted, or less than 50 kilojoules per mole of carbon dioxide extracted, or less than 40 kilojoules per mole of carbon dioxide extracted, or less than 30 kilojoules per mole of carbon dioxide extracted, or less than 20 kilojoules per mole of carbon dioxide extracted, or less than 10 kilojoules per mole of carbon dioxide extracted.

In a preferred embodiment is provided a method according to the invention, wherein said method is energetically efficient. In a more preferred embodiment is provided a method according to the invention, wherein said method requires less than 200 kilojoules per mole of carbon dioxide extracted, or less than 190 kilojoules per mole of carbon dioxide extracted, or less than 180 kilojoules per mole of carbon dioxide extracted, or less than 170 kilojoules per mole of carbon dioxide extracted, or less than 160 kilojoules per mole of carbon dioxide extracted, or less than 150 kilojoules per mole of carbon dioxide extracted, or less than 140 kilojoules per mole of carbon dioxide extracted, or less than 130 kilojoules per mole of carbon dioxide extracted, or less than 120 kilojoules per mole of carbon dioxide extracted, or less than 110 kilojoules per mole of carbon dioxide extracted, or less than 100 kilojoules per mole of carbon dioxide extracted, or less than 90 kilojoules per mole of carbon dioxide extracted, or less than 80 kilojoules per mole of carbon dioxide extracted, or less than 70 kilojoules per mole of carbon dioxide extracted, or less than 60 kilojoules per mole of carbon dioxide extracted, or less than 50 kilojoules per mole of carbon dioxide extracted, or less than 40 kilojoules per mole of carbon dioxide extracted, or less than 30 kilojoules per mole of carbon dioxide extracted, or less than 20 kilojoules per mole of carbon dioxide extracted, or less than 10 kilojoules per mole of carbon dioxide extracted.

The input of energy required in a method according to the invention is preferably the input of renewable energy. Preferably, renewable energy is selected from the group consisting of solar energy, wind energy, hydro energy, wave energy, geothermal energy and biomass energy. More preferably, said renewable energy is used in said method according to the invention is not in the form of electricity.

The extraction rate of a method according to the invention is the number of molecules of carbon dioxide extracted by performing said method per mass of said porous material per unit of time.

In a preferred embodiment is provided a method according to the invention wherein said method has an extraction rate of at least 0.1 mole of carbon dioxide per kilogram of porous material per hour, or at least 0.5 mole of carbon dioxide per kilogram of porous material per hour, or at least 1.0 mole of carbon dioxide per kilogram of porous material per hour, or at least 1.5 mole of carbon dioxide per kilogram of porous material per hour, or at least 2.0 mole of carbon dioxide per kilogram of porous material per hour, or at least 2.5 mole of carbon dioxide per kilogram of porous material per hour, or at least 3.0 mole of carbon dioxide per kilogram of porous material per hour, or at least 3.5 mole of carbon dioxide per kilogram of porous material per hour, or at least 4.0 mole of carbon dioxide per kilogram of porous material per hour, or at least 4.5 mole of carbon dioxide per kilogram of porous material per hour, or at least 5.0 mole of carbon dioxide per kilogram of porous material per hour. Preferably, said liquid is water.

In a preferred embodiment is provided a method according to the invention wherein said method has an extraction rate below 10 mole of carbon dioxide per kilogram of porous material per hour, or below 9 mole of carbon dioxide per kilogram of porous material per hour, or below 8 mole of carbon dioxide per kilogram of porous material per hour, or below 7 mole of carbon dioxide per kilogram of porous material per hour, or below 6 mole of carbon dioxide per kilogram of porous material per hour, or below 5 mole of carbon dioxide per kilogram of porous material per hour. Preferably, said extraction rate is higher than a given value as defined in the previous embodiment. Preferably, said liquid is water.

In a preferred embodiment is provided a method according to the invention wherein said method has an extraction rate from 0.5 mole of carbon dioxide per kilogram of porous material per hour up to 10 mole of carbon dioxide per kilogram of porous material per hour, preferably from 1 mole of carbon dioxide per kilogram of porous material per hour up to 5 mole of carbon dioxide per kilogram of porous material per hour. Preferably, said liquid is water.

A method according to the invention does not comprise the use of an electrode. The use of an electrode, in the context of this application, means the use of an electrical conductor (an electrode) to deliver an electric current in order to induce an electrochemical reaction in a system. Herein, it is understood that a method according to the invention may comprise the use of an electrical conductor for other purposes. For example, a metal may be used as a structural element during a method according to the invention, but may not be used to induce an electrochemical reaction. Preferably, an electrochemical reaction comprises the conversion of one compound selected from the group consisting of CO₂, H₂CO₃, HCO₃⁻, CO₃²⁻ into another compound selected from said group.

In a preferred embodiment is provided a method according to the invention, wherein said use of an electrode is the use of a metal as an electrode, i.e. the use of a metal to induce an electrochemical reaction.

In another preferred embodiment is provided a method according to the invention, wherein said use of an electrode is the use of a metal to induce an electric potential difference of at least 0.1 volts, or at least 0.2 volts, or at least 0.3 volts, or at least 0.4 volts, or at least 0.5 volts, or at least 0.6 volts, or at least 0.7 volts, or at least 0.8 volts, or at least 0.9 volts, or at least 1 volts, or at least 1.1 volts, or at least 1.2 volts, or at least 1.3 volts, or at least 1.4 volts, or at least 1.5 volts, or at least 1.6 volts, or at least 1.7 volts, or at least 1.8 volts, or at least 1.9 volts, or at least 2 volts to induce an electrochemical reaction.

In another preferred embodiment is provided a method according to the invention, wherein said use of an electrode is the use of a metal to induce a current density of at least 0.1 milliampere per cm², or at least 0.5 milliampere per cm², or at least 1 milliampere per cm², or at least 2 milliampere per cm², or at least 3 milliampere per cm², or at least 4 milliampere per cm², or at least 5 milliampere per cm², or at least 10 milliampere per cm², or at least 20 milliampere per cm², or at least 30 milliampere per cm², or at least 40 milliampere per cm², or at least 50 milliampere per cm², or at least 60 milliampere per cm², or at least 70 milliampere per cm², or at least 80 milliampere per cm², or at least 90 milliampere per cm², or at least 100 milliampere per cm², or at least 110 milliampere per cm², or at least 120 milliampere per cm², or at least 130 milliampere per cm², or at least 140 milliampere per cm², or at least 150 milliampere per cm², or at least 160 milliampere per cm², or at least 170 milliampere per cm², or at least 180 milliampere per cm², or at least 190 milliampere per cm², or at least 200 milliampere per cm², to induce an electrochemical reaction.

At least the absence of the use of an electrode renders a method according to the invention non-invasive for aquatic life. Moreover, in a preferred embodiment is provided a method according to the invention which does not comprise a step wherein more than 10%, 20%, 30%, 40%, 50%, 60%, 70%, 80% or 90% of the water, from which cabon dioxide is extracted, is heated, preferably by more than 30 °C.

In the context of this invention, non-invasiveness of aquatic life means that a method for extracting carbon dioxide may be used for extracting carbon dioxide from water, wherein said water comprises living beings, and wherein said method does not increase the mortality of said living beings. Preferably, said method does not increase the mortality of aquatic organisms by more than 10%, or by more than 5%.

### Apparatus

The invention provides an apparatus for performing a method for extracting carbon dioxide from a liquid according to any of the embodiments provided above. Specifically, the invention provides an apparatus comprising a porous material, wherein said apparatus may be used for performing a method for extracting carbon dioxide from a liquid, wherein said method comprises an extraction cycle, wherein said extraction cycle comprises (i) a sorption step wherein carbon dioxide dissolved in said liquid is adsorbed to a porous material, wherein said porous material contacts said liquid; and (ii) a desorption step wherein said adsorbed carbon dioxide obtained at the end of said sorption step is released from said porous material as gaseous carbon dioxide; and wherein said method does not comprise the use of an electrode. Said apparatus is referred to as an apparatus of or according to the invention in the context of this application.

An apparatus according to the invention does not comprise a functioning electrode. In line with the definitions above, not comprising a functioning electrode, in the context of this application, means that said apparatus does not comprise an electrical conductor (an electrode) which is used to deliver an electric current current in order to induce an electrochemical reaction during a method according to the invention. Herein, it is understood that an apparatus according to the invention may comprise an electrical conductor used for other purposes during a method according to the invention.

In a preferred embodiment is provided an apparatus according to the invention, wherein said apparatus comprises a sealable compartment. If an apparatus according to this embodiment is used for performing a method according to the invention, during the desorption step said sealable compartment is sealed and said sealed department comprises said porous material.

In a preferred embodiment is provded an apparatus according to the invention, wherein said apparatus comprises a sealable compartment, wherein said sealable compartment comprises said porous material.

In a preferred embodiment is provided an apparatus according to the invention, wherein said porous material is selected from the group consisting of zeolites, porous aluminosilicate polymorphs, activated carbons, carbon black, porous polymer networks, porous inorganic oxides, metal-organic-frameworks, zeolitic imidazolate frameworks and polyoligosiloxysilicones,
preferably wherein said porous material has a specific surface area of at least 100 m²/g, more preferably at least 1000 m²/g; and/or
preferably wherein said porous material has a carbon dioxide adsorption capacity of at least 1 millimol per gram at 298 Kelvin; and/or
preferably wherein said porous material has a carbon dioxide affinity of at least 1 min⁻¹, more preferably 5 min⁻¹ at 298 Kelvin; and/or
preferably wherein said porous material is a selective carbon dioxide adsorber in said liquid; and/or
preferably wherein said porous material comprises at least 1 acid site per 100 carbon dioxide adorption sites, more preferably at least 1 acid site per 20 carbon dioxide adsorption sites; and/or
preferably wherein said liquid is water.

In a more preferred embodiment is provided an apparatus according to the invention, wherein said porous material is selected from the group consisting of activated carbons and zeolites,
preferably wherein said porous material has a specific surface area of at least 1000 m²/g, more preferably at least 3000 m²/g; and/or
preferably wherein said porous material has a carbon dioxide adsorption capacity of at least 1 millimol per gram at 298 Kelvin; and/or
preferably wherein said porous material has a carbon dioxide affinity of at least 1 min⁻¹, more preferably 5 min⁻¹ at 298 Kelvin; and/or
preferably wherein said porous material is a selective carbon dioxide adsorber in said liquid; and/or
preferably wherein said porous material comprises at least 1 acid site per 100 carbon dioxide adorption sites, more preferably at least 1 acid site per 20 carbon dioxide adsorption sites; and/or
preferably wherein said liquid is water.

In another preferred embodiment is provided an apparatus according to the invention, wherein said apparatus has a fixed-bed layout. Herein, it is understood that said sorption step and desorption step take place in the same reactor comprised in said apparatus. Preferably, an apparatus according to this embodiment comprises a sealable compartment, more preferably wherein said sealable compartment comprises said porous material.

### Uses

The invention further provides the use of an apparatus according to the invention, or according to any preferred embodiment described above.

### Definitions

In this document and in its claims, the verb "to comprise" and its conjugations is used in its non-limiting sense to mean that items following the word are included, but items not specifically mentioned are not excluded. In addition the verb "to consist" may be replaced by "to consist essentially of" meaning that a method or an apparatus as defined herein may comprise additional steps or component(s) than the ones specifically identified, said additional component(s) not altering the unique characteristic of the invention. In addition, reference to an element by the indefinite article "a" or "an" does not exclude the possibility that more than one of the element is present, unless the context clearly requires that there be one and only one of the elements. The indefinite article "a" or "an" thus usually means "at least one".

Each embodiment as identified herein may be combined together unless otherwise indicated. All patent and literature references cited in the present specification are hereby incorporated by reference in their entirety.

In the context of this invention "identical" should not be so narrowly construed as to imply that the natural abundance of isotopes should be contemplated - identical should preferably only refer to the molecular structure as would be represented in a drawn structural formula.

In the context of this invention, a decrease or increase of a parameterto be assessed means a change of at least 5% of the value corresponding to that parameter. More preferably, a decrease or increase of the value means a change of at least 10%, even more preferably at least 20%, at least 30%, at least 40%, at least 50%, at least 70%, at least 90%, or 100%. In this latter case, it can be the case that there is no longer a detectable value associated with the parameter.

The word "about" or "approximately" when used in association with a numerical value (e.g. about 10) preferably means that the value may be the given value (of 10) more or less 0.1% of the value.

The proposition "between" when used in association with integers refers to a range including the boundary values mentioned. For example, if n is a value between 1 and 3, n may be 1, 2 or 3. In other words, "between X and Y" is a synonym of "from X up to Y".

In the context of this invention, "represented by structure X", "of structure X" and "with structure X" are used interchangeably.

An experiment may be any type of experiment in the context of this application, including a wet lab or in vitro experiment, and an in silico or computational experiment. Hence, experimental results are meant to encompass computational results.

A first system contacts a second system if a significant part of the outer surface of said first system is contacts with said second system. Preferably, said significant part of the outer surface is at least 50%, or at least 55%, or at least 60%, or at least 65%, or at least 70%, or at least 75%, or at least 80%, or at least 85%, or at least 90%, or at least 95%, or 100% of said outer surface. For example, a porous material contacts a liquid if it is partially or fully submerged in said liquid, preferably wherein partially means that at least 50%, or at least 55%, or at least 60%, or at least 65%, or at least 70%, or at least 75%, or at least 80%, or at least 85%, or at least 90%, or at least 95% of the outer surface of said porous material contacts said liquid.

### References

[1] Aiman Eid Al-Rawajfeh, Heike Glade, Hazim Mohameed Qiblawey, and Joachim Ulrich. Simulation of CO2 release in multiple-effect distillers. Desalination, 166:41-52, August 2004.
[2] Charles-Francois de Lannoy, Matthew D. Eisaman, Arun Jose, Stephen D. Karnitz, Richard W. DeVaul, Kathy Hannun, and Jessy L.B. Rivest. Indirect ocean capture of atmospheric CO2: Part i. prototype of a negative emissions technology. International Journal of Greenhouse Gas Control, 70:243-253, March 2018.

### Examples

The following examples are offered for illustrative purposes only, and are not intended to limit the scope of the present invention in any way.

### Example 1: Extraction with carbon black

In this Example tap water was carbonated using a Soda Stream. Upon carbonation, the pH of the tap water went down from 6.96 to 5.48. Leaving the bottle open for 15 minutes resulted in a pH change to 5.40 after which it remained stable.

100ml of carbonated water was poured into a glass, and 3g of carbon black (A8040605 SF Super Activated Carbon produced for AquaDistri - aquarium applications) was added to it. The pH went up to 5.90. Adding 1.5g more, the pH further increased to 6.44. Small gas bubbles form at the carbon black pallets, begging the question: where did the carbon dioxide go? Did it adsorb in the material, or just leave the water in the bubbles?

Holding a plastic bell with a CO₂ analyser over the glass showed that the CO₂ level on top of the water is going up, indicating that some carbon dioxide is leaving the water. However, as the concentration is significantly higher than the CO₂ concentration in ambient air, this CO₂ can also be utilised for easier capture.

Finally, the adsorbent was seived, to remove most of the water. Then, the adsorbent was heated in a pan on a stove, at low power. A plastic bell with an opening on the side was put on top of the pan. First, water vapourwas formed, but soon thereafter, the measured carbon dioxde level also went up to levels much higher than 2500 ppm. Carbon dioxide therefore also has to be present in the material.

Repeating the same test, but without carbonation of the adsorbent did show a small increase in the pH of the water, indicating that the active coal has certain basic properties. However, no bubble formation was observed, no augmentation in the carbon dioxide level above the water level. Moreover, no carbon dioxide was released upon subsequent heating. These reproducible tests show that carbon dioxide indeed adsorbs from the water into the material.

## Claims

1. A method for extracting carbon dioxide from a liquid, said method comprising an extraction cycle, wherein said extraction cycle comprises
(i) a sorption step wherein carbon dioxide dissolved in said liquid is adsorbed to a porous material, wherein said porous material contacts said liquid;
(ii) a desorption step wherein said adsorbed carbon dioxide obtained at the end of said sorption step is released from said porous material as gaseous carbon dioxide;
wherein said method does not comprise the use of an electrode.

2. A method according to claim 1, wherein said method comprises at least two extraction cycles.

3. A method according to claim 1 or 2, wherein said liquid is water.

4. A method according to any one of claims 1 to 3, wherein said porous material is a selective carbon dioxide adsorber in said liquid.

5. A method according to any one of claims 1 to 4, wherein said porous material is selected from the group consisting of zeolites, porous aluminosilicate polymorphs, porous carbons, porous polymer networks, porous inorganic oxides, metal-organic-frameworks, zeolitic imidazolate frameworks and polyoligosiloxysilicones.

6. A method according to claim 5, wherein said porous material is selected from the group consisting of zeolites and porous carbons.

7. A mehod according to claim 6, wherein said porous material is selected from the group consisting of carbon black, activated carbons, silicalite-1, H-ZSM-5, faujasite, mordenite and zeolite.

8. A method according to claim 6, wherein said porous material is a porous carbon.

9. A method according to any one of claims 1 to 8, wherein said porous material comprises an acid site.

10. A method according to any one of claims 1 to 9, wherein said desorption step comprises reducing pressure, and/or heating said porous material, and/or bringing said porous material in contact with steam.

11. An apparatus for performing a method according to any one of claims 1 to 10, wherein said device comprises a porous material, and wherein said device does not comprise a functioning electrode.

12. An apparatus according to claim 11, wherein said apparatus has a fixed-bed layout, and wherein said apparatus comprises a sealable compartment.
